# FASCICULE DE BREVET EUROPEEN

(11) **EP 1 568 578 B1**
(45) Date de publication et mention de la délivrance du brevet: **14.01.2009**
(21) Numéro de dépôt: 05300136.8
(22) Date de dépôt: 22.02.2005
(51) Int. Cl.: B62D 25/08, B60R 21/34

(54) **Boite à eau sécable en cas de choc piéton**
Bei Fussgängeraufprall brechbarer Wasserkasten
Cowl box breakable in case of impact with a pedestrian

(30) Priorité: 27.02.2004 FR 0402003
(43) Date de publication de la demande: 31.08.2005
(73) Titulaire: RENAULT S.A.S., 92100 Boulogne Billancourt (FR)
(72) Inventeur: Birolini, André, 94110, Arcueil (FR); Saillard, Patrick, 75018, PARIS (FR)

(56) Documents cités:
- EP-A- 1 457 395
- FR-A- 2 788 250
- FR-A- 2 847 205
- US-A- 4 718 713

## Description

La présente invention concerne une boîte à eau pour véhicule automobile.

Dans un véhicule automobile, on prévoit à la partie inférieure du pare-brise avant une structure, couramment appelée boîte à eau ou gouttière transversale d'auvent, destinée à recueillir les eaux de ruissellement s'écoulant du pare-brise et à servir de source d'air de ventilation pour l'habitacle. Par ailleurs, cette structure peut parfois servir de soutien direct du bas du pare-brise. Dans d'autre cas, elle est fixée à la traverse inférieure de baie.

Le document FR 2 788 250 au nom de la Demanderesse montre une telle structure dans laquelle la boîte à eau est prévue pour être démontable.

L'influence de la boîte à eau sur les collisions a déjà donné lieu à des recommandations.

Selon les documents US 4 718 712 et US 4 718 713, la boîte à eau est reliée au pare-brise avec des zones de fragilisation localisée formée de manière qu'en cas de collision, les parties du moteur placé à l'avant qui pourrait se déplacer vers l'arrière et entraîner la boîte à eau et le bas du pare-brise se brisent localement et se déforment sans entraîner le bas du pare-brise, soit par désolidarisation complète soit par pivotement du bas sans désolidarisation du haut qui sert alors de pivot fixe. Le pare-brise ne risque pas ainsi de se briser et de blesser les occupants du véhicule. Ainsi, les collisions étudiées par ces documents sont plutôt les collisions entre véhicules ou avec un obstacle solide fixe et la sécurité est envisagée uniquement en rapport avec les occupants du véhicule concerné. Rien n'est envisagé pour la sécurité des piétons victimes d'une collision.

L'objet de l'invention est d'améliorer la boîte à eau connue par le document FR 2 788 250 pour offrir une meilleure sécurité à un piéton victime d'une collision et dont la tête porte sur le capot au voisinage de boîte à eau.

L'invention atteint son but grâce à une boîte à eau destinée à la partie avant de caisse d'un véhicule et comportant d'une part une partie centrale formant une gouttière en U ouvert vers le haut et fermée à ses extrémités par des joues latérales se terminant par des plateaux latéraux d'appui sur la caisse du véhicule, caractérisée en ce que les plateaux d'appui sont séparés de la partie centrale par une zone fragile destinée à se rompre en cas de choc avec un piéton.

Avantageusement, cette zone fragile est formée par une encoche séparant le plateau d'appui de la partie centrale.

Avantageusement, l'encoche comporte dans son fond des évidements, de manière à renforcer son caractère sécable.

D'autres caractéristiques et avantages de l'invention ressortiront de la description suivante d'un exemple de réalisation. Il sera fait référence aux dessins annexés sur lesquels :

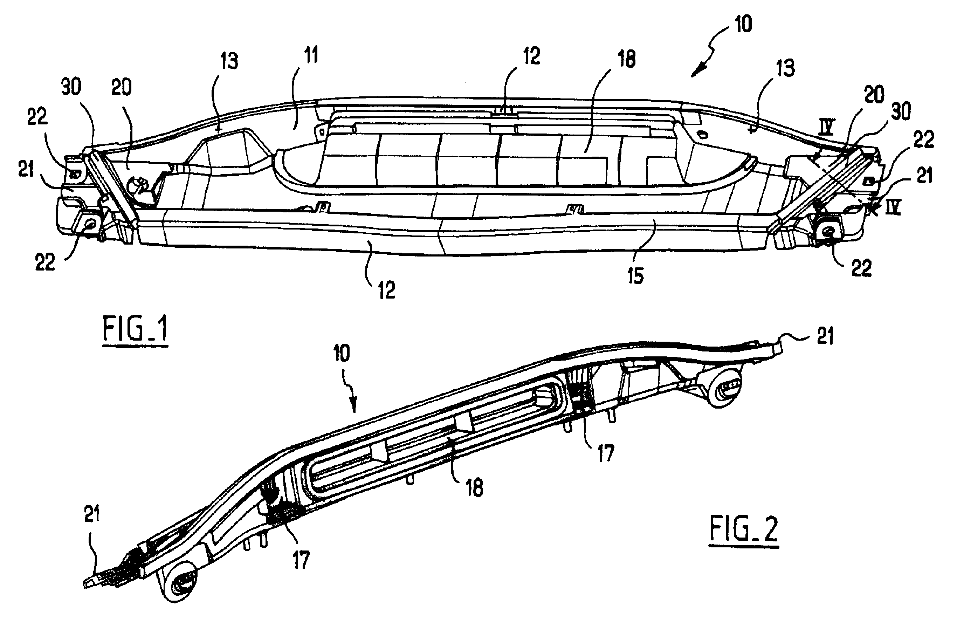

La figure 1 est une vue en perspective avant d'une boîte à eau conforme à l'inventian.
La figure 2 est une vue en perspective arrière de la même boîte à cau conforme à l'invention.

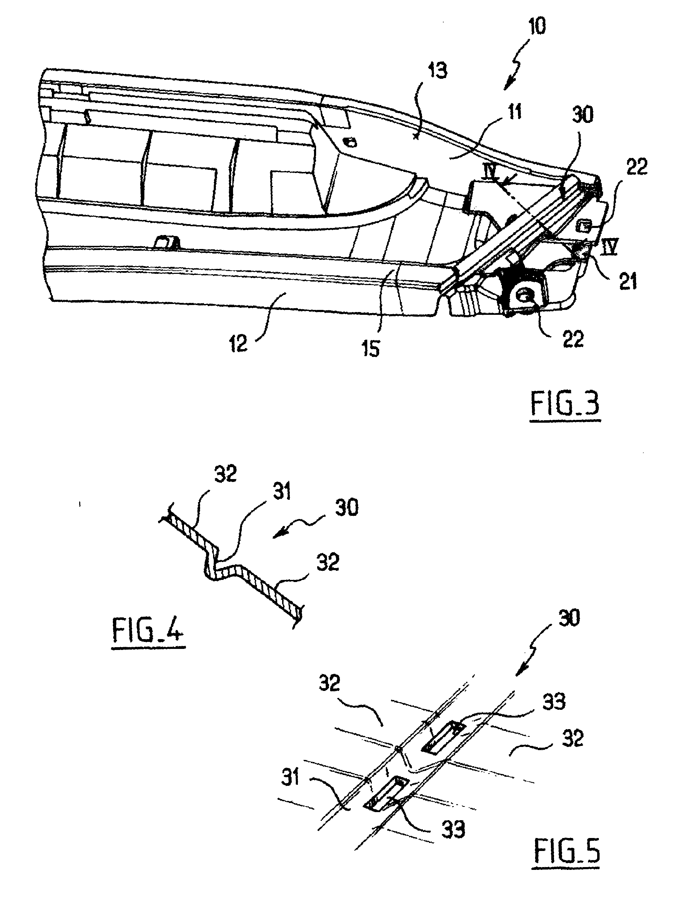

La figure 3 est une vue agrandie de la partie droite de la figure 1.
La figure 4 est un schéma de coupe selon la ligne IV-IV de la figure 3, montrant la zone de fragilisation en V de la boîte à eau.
La figure 5 est vue de détail du fond de la zone de fragilisation en V de la boîte à eau de la figure 4.
La figure 6 est un schéma d'implantation de la boîte à eau de l'invention dans l'avant d'un véhicule.

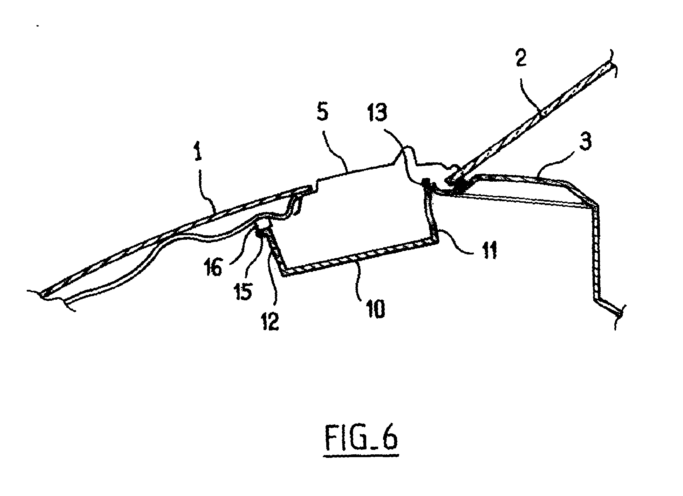

Comme le montre schématiquement la figure 6, la boîte à eau 10, sous forme générale d'une poutre en U ouvert vers le haut, est disposée sous et à l'arrière du capot 1 du véhicule, devant le pare-brise 2 qui repose sur la traverse inférieure de baie 3. La branche arrière 11 de la boîte à eau 10, au niveau de perçages 13, est fixée par des moyens de fixations non représentés, à la traverse inférieure de baie 3. La branche avant 12 de la boîte à eau 10 forme un rebord 15 susceptible de porter un joint 16 venant réaliser lorsque que le capot 1 est fermé une étanchéité du compartiment moteur par rapport à la boîte à eau 10. La boîte à eau 10 est couverte par la grille 5.

La branche arrière 11 de la boîte à eau 10 peut aussi comporter des logements et/ou des fixations 17 pour les mécanismes d'essuie-glace et des dispositifs de prise d'air 18.

La boîte à eau 10 est fermée à ses extrémités par des joues latérales 20 se terminant par des plateaux de fixation 21 comportant des perçages 22 supplémentaires de fixation sur la joue latérale du tablier du véhicule. Les plateaux de fixation 21 forment donc deux appuis éloignés portant la partie centrale de la boîte à eau 10 (on peut négliger les fixations de la partie centrale au niveau des perçages 13).

Selon l'invention, ces appuis éloignés sont séparés du corps principal ou partie centrale de la boîte à eau 10 par deux zones fragiles 30 constituées par une encoche 31 (déformation en V) formée dans une paroi 32. L'épaisseur de l'encoche peut être amincie par rapport à la paroi voisine et/ou on peut prévoir des évidements 33 au fond de l'encoche 31.

La boîte à eau 10 est avantageusement réalisée intégralement par moulage en matière plastique, notamment une matière rigide telle que le polyamide 6, éventuellement chargée par exemple de fibres de verre. Un ensemble de nervures permet de donner à la boîte à eau 10 la raideur voulue. Selon l'invention, un excès éventuel de raideur de la boîte à eau 10 par rapport à la sécurité d'un piéton en cas de choc est compensé par le caractère frangible des appuis latéraux de la boîte à eau 10.

## Revendications

1. Boîte à eau (10) destinée à la partie avant de caisse d'un véhicule et comportant d'une part une partie centrale formant une gouttière en U ouvert vers le haut et fermée à ses extrémités par des joues latérales (20) se terminant par des plateaux latéraux (21) d'appui sur la caisse du véhicule, **caractérisée en ce que** les plateaux d'appui (21) sont séparés de la partie centrale par une zone fragile (30) destinée à se rompre en cas de choc avec un piéton.

2. Boîte à eau selon la revendication 1, **caractérisée en ce que** cette zone fragile (30) est formée par une encoche (31) séparant le plateau d'appui de la partie centrale.

3. Boîte à eau selon la revendication 2, **caractérisée en ce que** l'encoche (31) comporte dans son fond des évidements (33), de manière à renforcer son caractère sécable.

## Claims

1. Cowl box (10) intended for the forward part of the body of a vehicle and comprising a central part forming a U-shaped channel section open at the top and closed at its ends by lateral endplates (20) ending in lateral plates (21) that bear against the body of the vehicle, **characterized in that** the bearing plates (21) are separated from the central part by a weaker region (30) designed to break in the event of pedestrian impact.

2. Cowl box according to Claim 1, **characterized in that** this weaker region (30) is formed by a notch (31) which separates the bearing plate from the central part.

3. Cowl box according to Claim 2, **characterized in that** the notch (31) in its closed end has indentations (33) that enhance its frangible nature.

## Patentansprüche

1. Wasserkasten (10), der für den vorderen Karosserieabschnitt eines Fahrzeugs bestimmt ist und einen mittleren Teil umfasst, der eine U-förmige Ablaufrinne bildet, die nach oben offen und an ihren Enden durch seitliche Wangen (20) verschlossen ist, die in seitlichen Platten (21) zur Abstützung auf der Fahrzeugkarosserie enden, **dadurch gekennzeichnet, dass** die Stützplatten (21) durch einen brechbaren Bereich (30), der im Falle eines Zusammenpralls mit einem Fußgänger brechen soll, vom mittleren Teil getrennt sind.

2. Wasserkasten nach Anspruch 1, **dadurch gekennzeichnet, dass** dieser brechbare Bereich (30) durch eine Mulde (31) gebildet wird, die die Stützplatte vom mittleren Teil trennt.

3. Wasserkasten nach Anspruch 2, **dadurch gekennzeichnet, dass** die Mulde (31) in ihrem Boden Aussparungen (33) umfasst, die ihre Brechbarkeit verstärken.
